# EUROPÄISCHE PATENTANMELDUNG

(11) **EP 3 473 924 A1**
(43) Veröffentlichungstag der Anmeldung: **24.04.2019**
(21) Anmeldenummer: 18188128.5
(22) Anmeldetag: 09.08.2018
(51) Int. Cl.: F21V 14/00, C09J 7/00, F21V 17/04, F21V 17/10, F21V 9/40, F21V 9/08, F21V 33/00

(54) **LICHTQUELLENABDECKELEMENT**

(30) Priorität: 20.10.2017 DE 102017124540
(71) Anmelder: Gebuhr, Martin, 81667 München (DE)
(72) Erfinder: Gebuhr, Martin, 81667 München (DE)
(74) Vertreter: SSM Sandmair

(57) **Zusammenfassung**

Lichtquellenabdeckelement (1) zum Abdecken oder Abdunkeln einer Lichtquelle (2a), mit einem lichtundurchlässigen Element (1a), welches eine Haftfläche oder Adhäsionsfläche oder Klebefläche (1b) aufweist, um das lichtundurchlässige Element (1a) ablösbar auf der Lichtquelle (2a) befestigen oder anbringen zu können.

## Beschreibung

Die vorliegende Erfindung betrifft ein Lichtquellenabdeckelement, um natürliche oder künstliche Lichtquellen, wie z.B. eine oder mehrere LEDs an einem elektronischen Gerät, vorübergehend und zuverlässig abdecken zu können, um z.B. störende Lichtquellen in einem Hotelzimmer abzudunkeln, ohne dass das elektronische Gerät ausgeschaltet werden muss.

Häufig sind z.B. in einem Hotelzimmer mehrere elektronische Geräte, wie z.B. Fernsehgerät, Wecker etc., vorhanden, welche meistens ein oder mehrere Leuchtelemente, wie z.B. LEDs, haben, die oft auch im ausgeschalteten Zustand des Geräts als Stand-by-Anzeige leuchten. Ein vollständiges Ausschalten des Gerätes durch Unterbrechung der Stromversorgung ist manchmal nicht möglich, da die Stromkabel oder Steckdosen schwer zugänglich oder eingebaut sind, so dass das Hotelzimmer nicht vollständig abgedunkelt werden kann. Für empfindliche Personen kann es hierdurch zu Problemen beim Einschlafen kommen und die Schlafruhe kann beeinträchtigt werden.

Zur Abdeckung einer Lichtquelle könnte ein an sich bekannter Post-it® verwendet werden. Jedoch sind die bekannten Post-it® nicht lichtundurchlässig und führen beim Überkleben einer Lichtquelle nur zu einer teilweisen Reduzierung des emittierten Lichts. Eine vollständige Abdunkelung ist nicht möglich.

Für medizinische Zwecke werden unter der Marke "SCARBAN"® wiederverwendbare Pflaster vertrieben, welche für den erfindungsgemäßen Zweck verwendet werden könnten, wenn diese für sichtbares Licht vollständig undurchlässig wären.

Es ist eine Aufgabe der Erfindung eine Möglichkeit zur wiederholbaren Verdunkelung oder Abdeckung einer Lichtquelle vorzuschlagen, welche wiederholt einfach und schnell angewendet werden kann.

Diese Aufgabe wird durch die Gegenstände der unabhängigen Ansprüche gelöst. Bevorzugte Ausführungsformen sind in den abhängigen Ansprüchen definiert.

Ein Lichtquellenabdeckelement zum Abdecken oder Abdunkeln einer Lichtquelle weist ein lichtundurchlässiges Element, wie z.B. einen lichtundurchlässigen Streifen auf, welcher eine Haftfläche oder Klebefläche hat, um das lichtundurchlässige Element fest aber ablösbar auf einer Lichtquelle befestigen oder anbringen zu können. Das lichtundurchlässige Element kann flächig ausgestaltet sein, um einen bestimmten Bereich abdecken zu können und kann relativ dünn sein, sofern es für sichtbares Licht nicht durchlässig ist. Beispielsweise kann das lichtundurchlässige Element eine Fläche von 10 cm², 20 cm² oder 50 cm² haben und z.B. 1-2 mm dick sein (von diesen nur beispielhaft angegebenen Werten abweichende kleinere oder größere Flächen und Dicken sind selbstverständlich möglich).

Mindestens eine Seite des lichtundurchlässigen Elements ist zumindest zum Teil oder vollständig, also über die gesamte Fläche, als Haft- oder Klebefläche ausgebildet oder mit einer haftenden oder klebenden Substanz bedeckt. Die haftende oder klebende Substanz kann beispielsweise so ausgebildet sein wie bei dem erwähnten Post-it® oder dem erwähnten "Scarban"® Pflaster, so dass ein mehrmaliges Verwenden des Lichtquellenabdeckelements an der gleichen oder an verschiedenen Stellen möglich ist. Die haftende oder klebende Substanz sollte nicht so stark kleben wie z.B. ein handelsübliches Pflaster, das lediglich auf eine einmalige Verwendung und möglichst gute Klebekraft ausgelegt ist. Für den erfindungsgemäßen Zweck ist es ausreichend, dass nur eine leichte und einfach ablösbare Haft- oder Klebeverbindung geschaffen wird, welche keiner weiteren mechanischen Belastung standhalten muss außer das lichtundurchlässige Element sicher an einer z.B. vertikalen Fläche z.B. aus Glas zu halten. Klebstoffe mit solchen Eigenschaften sind im Stand der Technik bekannt.

Die Haftfläche oder Klebefläche ist vorzugsweise wiederverwendbar ausgestaltet, so dass das lichtundurchlässigen Elements mehrfach nacheinander verwendet werden kann, also z.B. nach erfolgter Verwendung von einem Benutzer von der abzudunkelnden Stelle wieder abgezogen und für eine erneute Verwendung aufbewahrt werden kann, ohne dass die Haft- oder Klebekraft signifikant beeinträchtigt wird. Die Haftfläche oder Klebefläche kann z.B. durch ein Haft- oder Klebemittel realisiert werden, welches auf das lichtundurchlässige Element aufgetragen wird. Ebenso ist es alternativ oder ergänzend möglich, die Haftfläche oder Haftkraft durch einen anderen Effekt, wie z.B. elektrostatisches Haften (bei geeigneter Wahl des Materials des lichtundurchlässigen Elements oder auf einer Seite des lichtundurchlässigen Elements) oder Magnetkraft zu realisieren. Allgemein soll das Lichtquellenabdeckelement als "Magnet ohne Rückstände" an einer abzudunkelnden Fläche abnehmbar und sicher angebracht werden können, könnte also z.B. auch magnetisch sein.

Die Haft- oder Klebefläche kann z.B. auch entlang eines oder mehrerer gerader und/oder gebogener Streifen oder Linien auf einer Seite oder Fläche des lichtundurchlässigen Elements vorgesehen sein, so dass z.B. auch nicht mit einer Haftsubstanz bedeckte Bereiche oder allgemein nicht haftende Bereiche auf der aufzuklebenden oder anzuheftenden Fläche des lichtundurchlässigen Elements existieren. Vorteilhaft ist es, wenn die Haft- oder Klebefläche, sofern sie nicht über die gesamte Fläche vorgesehen oder aufgetragen ist, eine oder mehrere geschlossene Kurven bildet, also z.B. in der Form von sich kreuzenden Linien oder Kreisen oder als gitterförmiges Muster ausgebildet ist. Hierdurch kann ein sicheres Abdecken des von der Haft- oder Klebefläche umrandeten Bereichs des lichtundurchlässigen Elements realisiert werden.

Das lichtundurchlässige Element kann bandförmig oder streifenförmig sein. Beispielsweise kann das lichtundurchlässige Element in der Art eines bekannten Tesa® Films aufgerollt sein, so dass zur Anwendung einfach ein Stück mit gewünschter Länge abgerollt und dann abgetrennt, also z.B. abgeschnitten oder abgerissen, wird.

Das lichtundurchlässige Element kann elastisch oder verformbar sein, so dass es beispielsweise auch gut auf einer nicht ebenen Fläche oder über eine Kante oder einen Knick einer Oberfläche hinweg aufgeklebt oder angeheftet werden kann.

Das lichtundurchlässige Element kann schwarz sein, um für sichtbares Licht undurchlässig zu sein und die gewünschte Abdunkelung realisieren zu können. Allgemein kann das lichtundurchlässige Element auch eine andere Farbe haben, solange es die Eigenschaft besitzt für sichtbares Licht undurchlässig zu sein oder zu werden.

Das lichtundurchlässige Element kann aus einem intelligenten Werkstoff (Smart Material) bestehen, welches z.B. selbständig, also ohne Regelung von außen, auf verändernde Umweltbedingungen, wie z.B. eine Temperaturerhöhung oder Temperaturerniedrigung oder auf eine mechanische Belastung reagieren und z.B. seine Lichtdurchlässigkeit oder Transparenz verändern kann. Ebenso kann das lichtundurchlässige Element aus einem intelligenten Werkstoff (Smart Material) bestehen, dessen Lichtdurchlässigkeit oder Transparenz durch ein Steuersignal oder durch die aktive Zufuhr von Energie, wie z.B. elektrische Spannung, beeinflusst werden kann. Beispielsweise kann das lichtundurchlässige Element vollständig oder zum Teil aus einem chromogenen Material bestehen, wie z.B. einem elektrochromen oder photochromen oder thermochromen Material.

Unter dem Begriff **Elektrochromie** fasst man die Fähigkeit von Molekülen und Kristallen zusammen, ihre optischen Eigenschaften durch ein äußeres elektrisches Feld oder einen Stromfluss zu ändern. Grundlage bildet die Beeinflussung von Elektronenzuständen (Redoxreaktion). Typischerweise findet man starke elektrochrome Effekte bei einigen Übergangsmetalloxiden (z.B. Wolframoxid), Komplexverbindungen (z.B. Berliner Blau) und bei einigen leitfähigen Polymeren. Bei leitfähigen Polymeren kann das Polymergerüst reversibel elektrochemisch oxidiert und reduziert werden, bei dünnen Schichten ist die Farbe des leitfähigen Polymers vom Oxidationszustand abhängig (Beispiele sind 3,4-Polyethylendioxythiophen (PEDOT) und Polyanilin). Das Lichtquellenabdeckelement kann z.B. durch ein mittels einer Ansteuervorrichtung erzeugtes elektrisches Feld oder durch einen Stromfluss verdunkelt oder wieder transparenter gemacht werden, so dass z.B. das abgedeckte Lichtelement tagsüber wieder sichtbar gemacht werden kann, ohne dass das Lichtquellenabdeckelement entfernt werden muss, so dass dieses am gewünschten Ort verbleiben kann und für eine z.B. erneute Verdunkelung einfach entsprechend umgeschaltet werden kann.

Unter **Photochromie** versteht man die lichtinduzierte reversible Umwandlung zweier Spezies ineinander unter Änderung des Absorptionsspektrums sowie damit einhergehend ihrer physikalischen Eigenschaften. Die Rückreaktion kann dabei thermisch (T-Typ-Photochromie) oder ebenfalls photochemisch (P-Typ-Photochromie) ablaufen. Im thermischen Fall wird das System unter der Bedingung, dass A stabiler ist als B, nach Entfernen der anregenden Strahlungsquelle bei Standardbedingungen spontan in den Zustand A zurückkehren. Bei P-Typ-Photochromie wird die Rückreaktion unter Bestrahlung mit einer bestimmten Wellenlänge stark beschleunigt. Diese Reversibilität unterscheidet Photochromie von den wohlbekannten lichtinduzierten Reaktionen. Zeigt das System unter Einwirkung der elektromagnetischen Strahlung eine Erhöhung der Farbigkeit, so spricht man von positiver, im umgekehrten Fall von negativer Photochromie. Die Transparenz des Lichtquellenabdeckelements kann so z.B. lichtinduziert eingestellt werden, z.B. durch Bestrahlung oder Beleuchtung, indem von einer helleren (lichtdurchlässigeren) Farbe auf eine dunklere (lichtundurchlässigere) Farbe gewechselt wird.

Als **Thermochromie** bezeichnet man die Eigenschaft bestimmter Substanzen, bei Temperaturänderung die Farbe zu ändern. Dieser Vorgang ist reversibel, d.h. nach dem Abkühlen nehmen sie wieder ihre ursprüngliche Farbe an. Grund für diese Farbveränderungen sind Änderungen der Molekül- oder Kristallstruktur. Bekannt ist dieses Verhalten unter anderem bei den anorganischen Verbindungen Rutil und Zinkoxid, die ihre Farbe bei starkem Erhitzen von Weiß nach Gelb ändern. Die Transparenz des Lichtquellenabdeckelements kann so z.B. durch Erwärmung z.B. mittels eines Heizelements oder durch Abkühlung des Raumes oder mittels eines am Lichtquellenabdeckelements vorgesehenen Kühlelements eingestellt werden, indem von einer helleren (lichtdurchlässigeren) Farbe auf eine dunklere (lichtundurchlässigere) Farbe gewechselt wird.

Das lichtundurchlässige Element kann auch in der Art eines **Blickschutzfilters** ausgebildet sein, z.B. als eine flache Kunststoffscheibe oder -folie, welche über das abzudeckende Lichtelement gelegt oder geklebt wird und den Blickwinkel, in welchem das Licht sichtbar ist, z.B. auf ca. 30° einschränkt. Eine solche Filterfolie oder -scheibe kann einerseits die gewünschte Verdunkelung realisieren, wenn sich z.B. der abzudunkelnde Bereich schräg, also z.B. mehr als ca. 30°, von der Senkrechten des lichtundurchlässigen Elements versetzt befindet (bezüglich dieses Bereichs ist das Element lichtundurchlässig), wobei andererseits das Leuchtelement sichtbar bleibt, wenn man z.B. senkrecht darauf blickt.

Der solcher Blickfilter besteht z.B. aus senkrecht verlaufenden Lamellen, die auf der Ober- und/oder Unterseite von einer transparenten Schutzfolie getragen werden. In der Mikroaufnahme rechts beträgt der Abstand zwischen den Lamellen z.B. ca. 60 µm. Sie vermindern die Durchlasshelligkeit um ca. 30 %. Bei einer Foliendicke von ca. 600 µm entfallen 200 µm auf die Steghöhe und jeweils 200 µm auf die Trägerfolien. Daraus resultiert eine geometrische Abschattung bei einem seitlichen Blickwinkel von ca. 25°. Der Blick von oben ist nicht eingeschränkt. Solche Folien gibt es z.B. von 3M.

Gemäß einem weiteren Aspekt betrifft die Erfindung die Verwendung eines wie oben beschriebenen Lichtquellenabdeckelements zum Abdecken oder Abdunkeln einer Lichtquelle.

Ein weiterer Aspekt der Erfindung betrifft ein Verfahren zum Abdecken oder Abdunkeln einer Lichtquelle, wobei ein wie oben beschriebenes Lichtquellenabdeckelement mit der Haftfläche oder Klebefläche auf oder oberhalb der Lichtquelle befestigt oder angebracht wird, um die Lichtquelle abzudecken oder abzudunkeln. Das Verfahren kann mehrmals hintereinander an dem gleichen oder verschiedenen Orten durchgeführt werden.

Vor dem Abdecken oder Abdunkeln der Lichtquelle kann das Lichtquellenabdeckelement in geeigneter Größe ausgewählt oder auf eine passende Größe zurechtgeschnitten oder zurechtgerissen werden, wenn es z.B. von einem größeren Lichtquellenabdeckelement abgerollt oder abgetrennt wird.

Eine Ausführungsform der Erfindung wird nachfolgend unter Bezugnahme auf eine Figur beschrieben. Es zeigt:

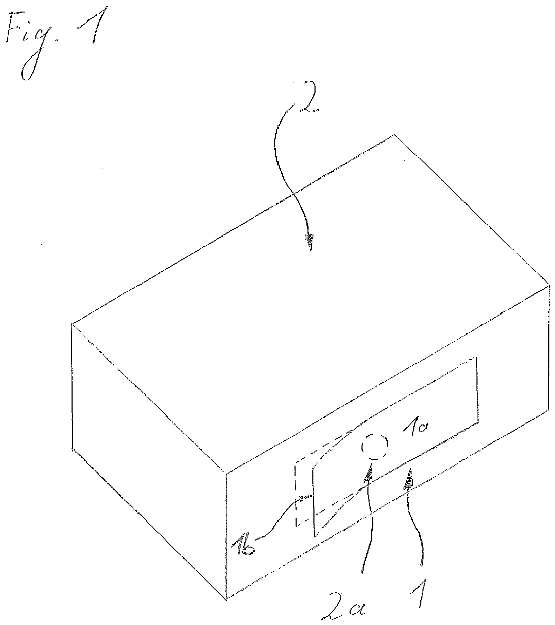

- Figur 1:: eine Perspektivansicht eines auf ein leuchtendes elektronisches Gerät aufgeklebten Lichtquellenabdeckelements.

Figur 1 zeigt ein elektronisches Gerät 2, wie z.B. einen an sich bekannten Wecker, der auf einer Seite eine mit 2a bezeichnete Lichtquelle, z.B. eine LED, aufweist, welche abgedunkelt werden soll.

Hierzu wird ein Lichtquellenabdeckelement 1 bestehend aus einem lichtundurchlässigen streifenförmigen Element 1a und auf der aufzuklebenden Seite flächig darauf aufgebrachtem Haft- oder Klebefilm 1b mittels des Haft- oder Klebefilms 1b an der im Ausführungsbeispiel vertikal angeordneten Oberfläche des elektronischen Geräts 2 oberhalb der LED 2a aufgeklebt, so dass das Lichtquellenabdeckelement 1 die LED 2a bedeckt bzw. das von der LED 2a emittierte Licht nicht nach außen treten kann. Das Lichtquellenabdeckelement 1 kann dann je nach Wunsch über einen längeren Zeitraum von z.B. mehreren Stunden auf dem elektronischen Gerät 2 aufgeklebt bleiben.

Nach erfolgter Verwendung kann das Lichtquellenabdeckelement 1 wieder abgezogen und für eine erneute Verwendung an gleicher oder anderer Stelle vom Benutzer aufbewahrt werden.

## Patentansprüche

1. Lichtquellenabdeckelement (1) zum Abdecken oder Abdunkeln einer Lichtquelle (2a), mit einem lichtundurchlässigen Element (1a), welches eine Haftfläche oder Klebefläche (1b) aufweist, um das lichtundurchlässige Element (1a) ablösbar auf der Lichtquelle (2a) befestigen oder anbringen zu können.

2. Lichtquellenabdeckelement nach Anspruch 1, wobei das lichtundurchlässige Element (1a) flächig oder bandförmig oder streifenförmig ist.

3. Lichtquellenabdeckelement nach einem der vorhergehenden Ansprüche, wobei das lichtundurchlässige Element (1a) elastisch oder verformbar ist.

4. Lichtquellenabdeckelement nach einem der vorhergehenden Ansprüche, wobei das lichtundurchlässige Element (1a) schwarz ist.

5. Lichtquellenabdeckelement nach einem der vorhergehenden Ansprüche, wobei das lichtundurchlässige Element (1a) aus einem chromogenen Material oder aus einem elektrochromen Material oder aus einem photochromen Material oder aus einem thermochromen Material besteht.

6. Lichtquellenabdeckelement nach dem vorhergehenden Anspruch mit einem Schaltelement zum Schalten oder Verrücken der Lichtundurchlässigkeit oder Transparenz des lichtundurchlässigen Elements (1a).

7. Lichtquellenabdeckelement nach einem der vorhergehenden Ansprüche, wobei das lichtundurchlässige Element (1a) als Blickschutzfilter ausgebildet ist.

8. Lichtquellenabdeckelement nach einem der vorhergehenden Ansprüche, wobei die Haftfläche oder Klebefläche (2b) wiederverwendbar ausgestaltet ist, sodass nach Lösen der Haft- oder Klebeverbindung ein erneutes Anheften oder Ankleben möglich ist.

9. Lichtquellenabdeckelement nach einem der vorhergehenden Ansprüche, wobei die Haftfläche oder Klebefläche (2b) flächig auf einer Seite des lichtundurchlässigen Elements (1a) aufgebracht ist.

10. Lichtquellenabdeckelement nach einem der vorhergehenden Ansprüche, wobei die Haftfläche oder Klebefläche (2b) durch ein Haftmittel, einen Klebstoff, einen Magneten und/oder durch eine elektrostatisch aufladbare Fläche gebildet wird.

11. Verwendung eines Lichtquellenabdeckelements (1) nach einem der vorhergehenden Ansprüche zum Abdecken oder Abdunkeln einer Lichtquelle (2a).

12. Verfahren zum Abdecken oder Abdunkeln einer Lichtquelle (2a), wobei ein Lichtquellenabdeckelement (1) nach einem der Ansprüche 1 bis 10 mit der Haftfläche oder Klebefläche (1b) auf oder oberhalb der Lichtquelle (2a) befestigt oder angebracht wird, um die Lichtquelle (2a) abzudecken oder abzudunkeln.

13. Verfahren nach dem vorhergehenden Anspruch, wobei vor dem Abdecken oder Abdunkeln der Lichtquelle (2a) das Lichtquellenabdeckelement (1) in geeigneter Größe ausgewählt oder auf eine passende Größe zurechtgeschnitten oder zurechtgerissen wird.
